# EUROPEAN PATENT SPECIFICATION

(11) **EP 2 241 492 B1**
(45) Date of publication and mention of the grant of the patent: **31.05.2017**
(21) Application number: 10003871.0
(22) Date of filing: 12.04.2010
(51) Int. Cl.: B62B 9/12, B62B 9/18

(54) **A tandem stroller frame with an inclination adjustable second seat**
Tandemkinderwagenrahmen mit einem Zweitsitz mit einstellbarer Neigung
Cadre de poussette à deux places avec réglage de l'inclinaison du second siège

(30) Priority: 17.04.2009 CN 200920151372 U
(43) Date of publication of application: 20.10.2010
(73) Proprietor: Dorel Juvenile (Zhongshan) Product Co., Ltd., Zhong Shan Guangdong (CN)
(72) Inventor: Chen, Ho Sheng, Pi-Tzu-Tou Chiai County (TW); Hung, Sheng-Po, Chuayi City 600 (TW); Cheng, Kuang-Neng, Chiayi County 622 (TW)
(74) Representative: Ter Meer Steinmeister & Partner

(56) References cited:
- EP-B1- 2 379 395
- WO-A1-2008/127128
- DE-U1- 20 010 213
- JP-A- S5 357 638

## Description

### BACKGROUND OF THE INVENTION

### FIELD OF THE INVENTION

The present invention relates generally to tandem strollers, and more particularly to a tandem stroller which has a second seat adjustable in inclination thereof.

### DESCRIPTION OF THE RELATED ART

Strollers for transporting two infants have been made in two different configurations, namely a side-by-side configuration and a tandem (one in back of the other) configuration. Although side-by-side umbrella strollers are known, umbrella strollers of the tandem type have not been known. As a result, tandem strollers for transporting two infants have conventionally been of the non-umbrella stroller type. This, however, requires a heavy, more complicated assembly than an umbrella stroller, and is therefore, not as easily foldable and transportable.

Some modified tandem strollers which comprises a second seat detachably connected to a stroller frame for solving the above-mentioned heavy and complicated problem are disclosed in U.S. Pat. No. 6,045,145 and WO 2008/127128 A1 which is considered as representing the closest state of the art and discloses a stroller according to the preamble of claim 1. However, such a second seat of such modified tandem strollers can not be folded into a reduced size and can not be adjusted in inclination; further, the second seat of U.S. Pat. No. 6,045,145 may always obstruct the child to enter the first seat, making the modified tandem stroller less convenience.

EP 2 379 395 B1, which has been published after the priority date of this patent, describes a tandem stroller.

### SUMMARY OF THE INVENTION

To achieve advantages over the prior art, the present invention provides a tandem stroller frame comprising: a stroller frame, a first seat and a second seat.

The stroller has a pair of front tube, a pair of rear tubes pivoted with the pair of front tube, and a pair of push bars connected with the pair of front tubes by a pair of foldable joints.

The first seat is detachably mounted to the stroller frame can facing either frontward or rearward; and the second seat, has a pair of guiding bars, a seat back support bar and a pair of support bars.

The pair of guiding bars both are detachably secured to the pair of rear tubes, the seat back support bar has two ends moveable and guided by the guiding bars, and the pair of support bars can be a cushioning element pivotably connected between the pair of guiding bars and the seat back support bar.

By this structure, the present invention can provide various comfortable inclinations to the second seat occupant and more convenient operations to the caregiver to use the tandem stroller.

The present invention can be best understood through the following description and accompanying drawing, wherein:

### BRIEF DESCRIPTION OF THE DRAWINGS

FIG. 1 is a perspective view showing an embodiment of the tandem stroller frame with an inclination adjustable second seat according to the present invention.
FIG. 2 is a schematic side view showing a first seat is connecting to the tandem stroller frame of FIG. 1; in the meantime, a second seat has been installed thereto and kept in an operation range.
FIG. 3 is a schematic side view showing the first seat and the second seat both are connected to the stroller frame.
FIG. 4 is a perspective view showing the pair of rear tubes of the stroller frame in accordance with the present invention.
FIG. 5 is a side cross-sectional view showing the guiding bar connected to the rear tube by a connecting mechanism.
FIG. 6 is a schematic cross-sectional view showing the release operation of the guiding bar by pressing the release member of the connecting mechanism.
FIG. 7 is a perspective view showing the second seat of the stroller frame in accordance with the present invention, wherein the support bars are pivotally connected between the seat back support bars and the guiding bars.
FIG. 8 is an elevation view combined with partially enlarged cross-sectional view showing the manipulating mechanism associated with the second seat.
FIG. 9 is a fragmentary cross-sectional view showing a limiting mechanism is mounted on the guiding bar for limiting the seat back support moving within an operation range.
FIG. 10 is a schematic side view showing the folding of the second seat from an operation range to a folded position.
FIG. 11 is a schematic side view showing the second seat and the stroller frame of FIG. 1 both are folded into a reduced size.

### DETAILED DESCRIPTION OF THE PREFERRED EMBODIMENTS

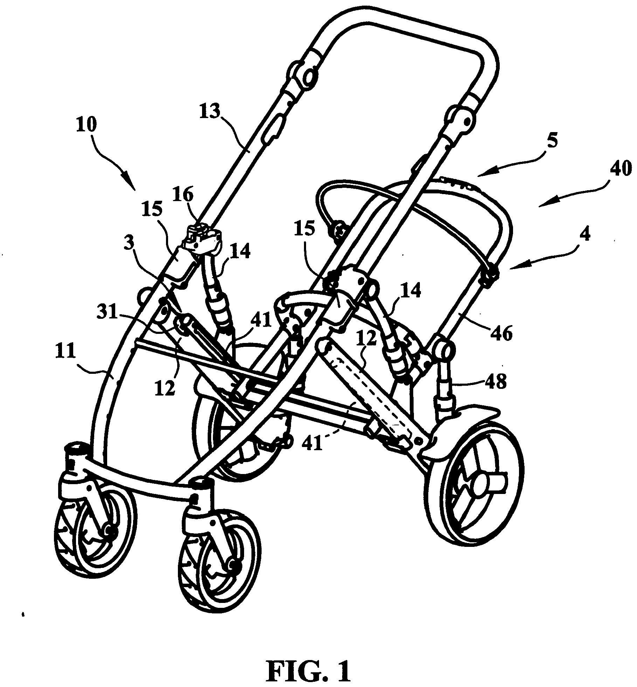

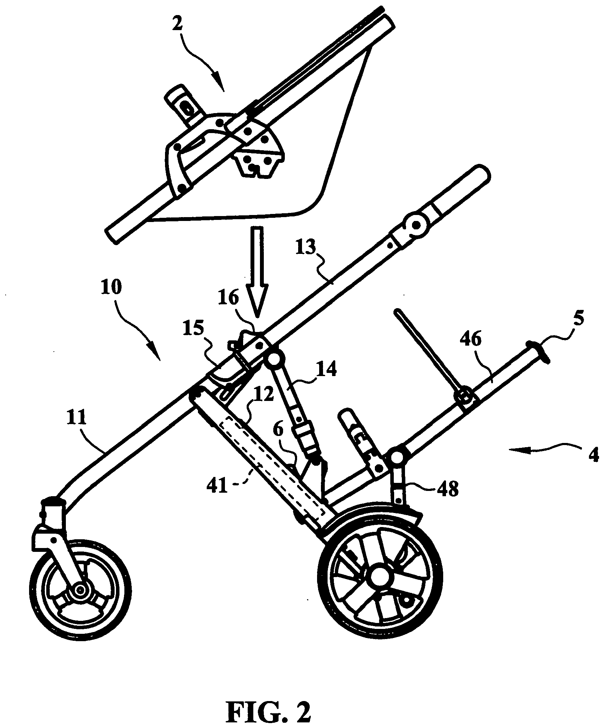

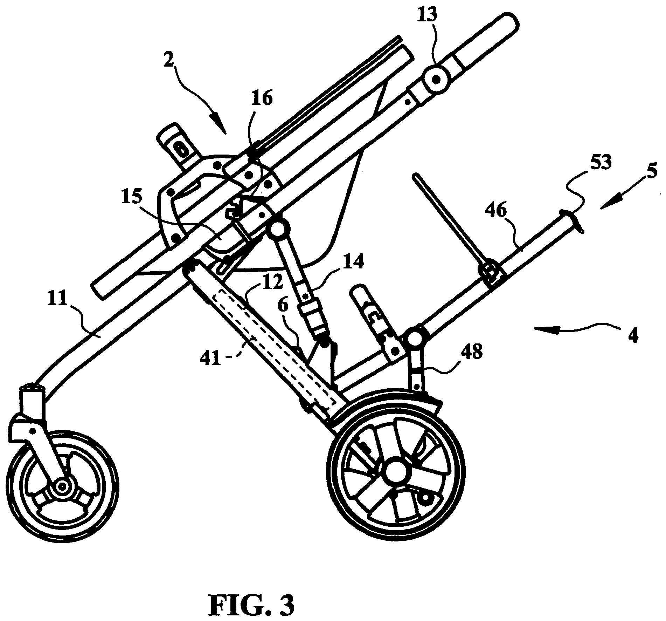

Referring to the drawings, wherein like numerals indicate like elements, there is shown in FIGS. 1 to 3, an embodiment of the tandem stroller frame comprising: a stroller frame 10, a first seat 2 and a second seat 4.

The stroller frame 10 has a pair of front tube 11, a pair of rear tubes 12 pivoted with the pair of front tube 11, and a pair of push bars 13 connected with the pair of front tubes 11 by a pair of foldable joints 15. Preferably, the stroller frame 10 can further include a pair of connecting bars 14 for pivotably connecting between the pair of push bars 13 and the pair of rear tubes 12, so as to carry the pair of rear tubes 12 to close to the pair of front tube 11 by rotation of the pair of push bars 13, when unlocked the foldable joints 15.

Preferably, the stroller frame 10 can further include a pair of connecting mounts 16 each provided with a socket for detachably connecting with the first seat 2. The first seat 2 can be embodied as a baby carrier or child safety seat, that is mountable to the stroller frame 10 facing either forward or rearward.

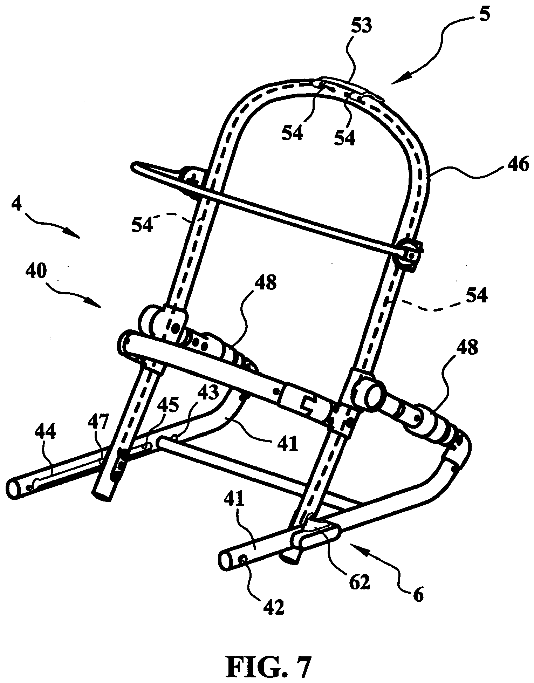

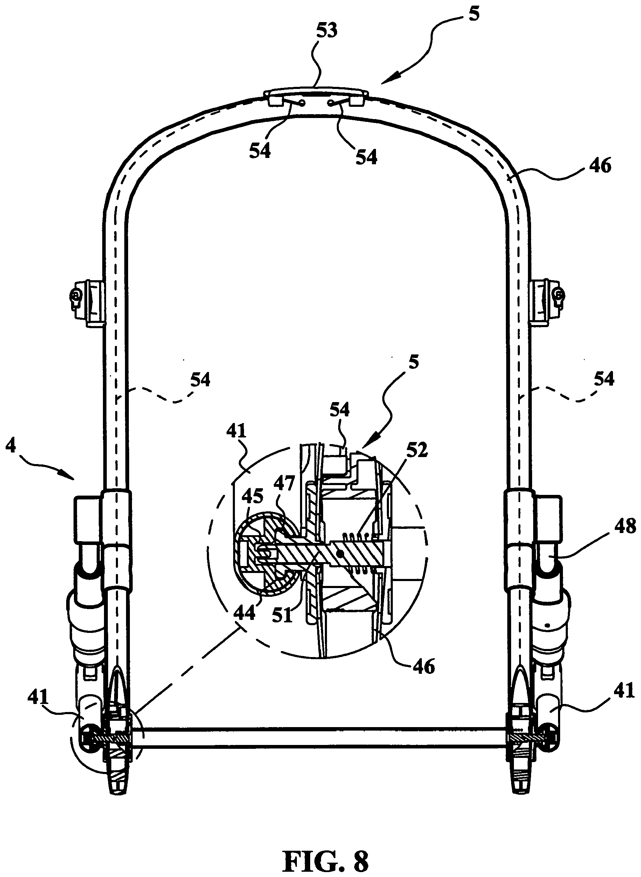

Referring to the FIGS.7 and 8, the second seat 4 has a pair of guiding bars 41, a seat back support bar 46 and a pair of support bars 48. The pair of guiding bars 41 are secured to the pair of rear tubes 12, the seat back support bar 46 has two ends guided by the guiding bars 41, and the pair of support bars 48 are pivotably connected between the seat back support bar 46 and the pair of guiding bars 41. The support bars 48 are embodied as a pair of cushioning element, such as pneumatic bars, for cushioning the second seat 4.

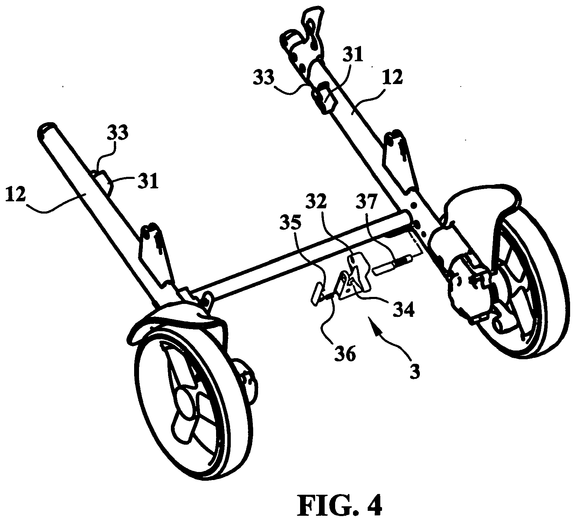

Preferably, the pair of guiding bars 41 may be detachably secured to the pair of rear tubes 12 thereby to detachably connect the second seat 4 to the stroller frame 10. For instance, the pair of guiding bars 41 are detachable mounted to the pair of rear tubes by a pair of connecting mechanisms 3 as shown in FIGS. 4 to 6.

Each guiding bar 41 may be formed with a guiding slot 44, and each end of the seat back support bar 46 may have a sliding member 47 for sliding along the guiding slot 44, so as to change the inclination of the seat back support bar 46.

For positioning the sliding member 47 along the guiding slot 44, a plurality of positioning holes 45 may be formed within the guiding slot 44.

A manipulating mechanism 5 may be associated with the seat back support bar 46 for positioning the sliding member 47, which includes a pair of latching member 51, a pair of resilient member 52 and a driving element 53. Each latching member 51 is retractably installed in the sliding member 47 and biased by the resilient member 52 so as to insert and engage with one of the positioning holes 45.

The latching member 51 can be retracted from the positioning holes 45 by the driving element 53, when needed to change the inclination of the seat back support bar 46 as well as the second seat 4. Preferably, the manipulating mechanism 5 may further include a pair of associating member 54 connected between the latching members 51 and the driving element 53, so that to permit the caregiver to retract the latching members 51 from one of the positioning holes 45 by the driving element 53 remotely.

Referring now to FIGS. 4 to 6, each connecting mechanism 3 includes a connecting element 31, a fixing mount 32, a latch member 35, resilient member 36 and a release member 37.

Each guiding bar 41 has one end detachably connected to one of the rear tubes 12 by the connecting element 31; preferably, each guiding bar 41 is formed with a protruded positioner 42 at the end thereof, and each connecting element 31 is formed with a positioning slot 33 to retain the protruded positioner 42 of the guiding bar 41.

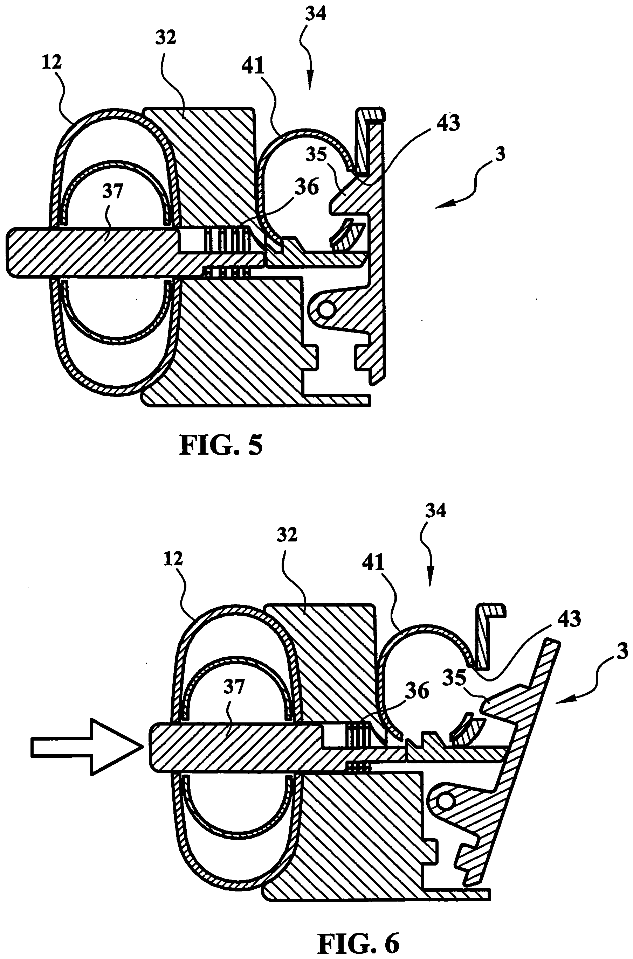

Referring to FIGS. 5 to 6, the another end of the guiding bar 41 is detachably connected to rear tubes 12 by the fixing mount 32 and the latch member 35. A holding space 34 is formed between the fixing mount 32 and the latch member 35 for receiving the end of the guiding bar 41 therebetween. Preferably, the guiding bar 41 may be formed with a locking hole 43 for engaging with the latch member 35.

The release member 37 is biased by resilient member 36 in a direction departing from the latch member 35. When need to release the guiding bars 41 from the rear tubes 12, the release member 37 is pressed against the latch member 35 to compress the resilient member 36 thereby disengaging the latch member 35 from the locking hole 43, so as to release the guiding bars 41 from the rear tubes 12.

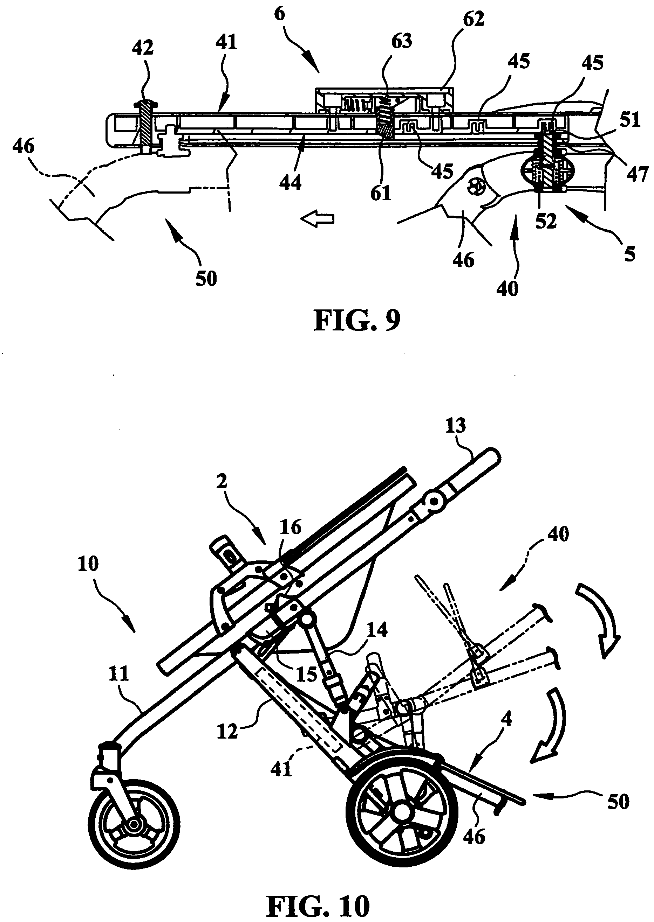

On the guiding bars 41, as shown in FIG. 9, may install a limiting mechanism 6 which includes a stopper 61, a releaseing button 62 and resilient member 63. The stopper 61 is biased by the resilient member 63 so as to be retained in the guiding slot 44 to limite the moving of the sliding member 47.

When the stopper 61 is retained in the guiding slot 44, the second seat 4 will be kept in an operation range 40, so that allows the sliding member 47 to be positioned in one of the positioning holes 45 by the manipulating mechanism 5 thereby keeping the second seat 4 in a specific desired inclination.

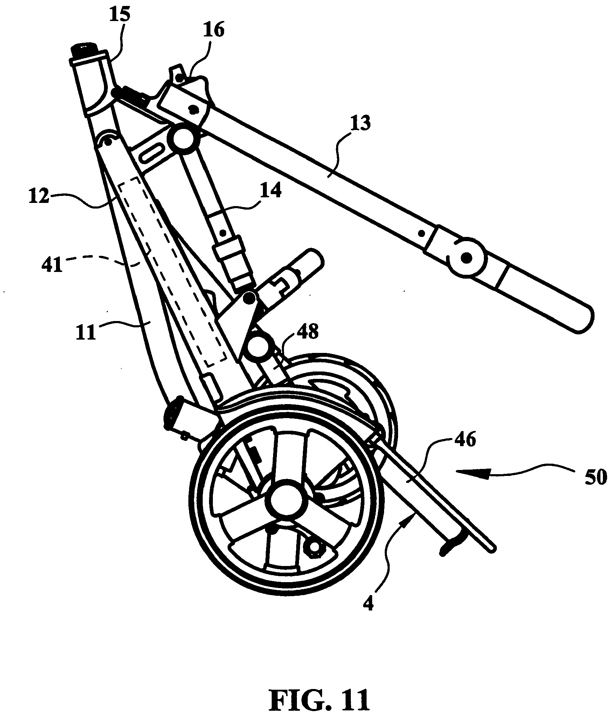

The stopper 61 can be retracted from the guiding slot 44 by operating the releaseing button 62, and that allows the the sliding member 47 to slide to one end of the guiding slot 44 thereby to fold the second seat 4 in a folded position 50 as shown in FIGS. 10 and 11.

By this structure, the present invention can provide various comfortable inclinations to the second seat occupant and more convenient operations to a caregiver to use the tandem stroller.

This invention has been described in detail with respect to the preferred embodiments. These embodiments, however, are merely for example only and this invention is not intended to be restricted thereto. It will be easily understood by those skilled in the art that variations and modifications can be easily made within the scope of the invention, as defined by the appended claims.

## Claims

1. A tandem stroller with an inclination adjustable second seat, comprising:
- a stroller frame (10), having a pair of front tube (11), a pair of rear tubes (12) pivoted with the pair of front tube (11), and a pair of push bars (13) connected with the pair of front tubes (11) by a pair of foldable joints (15);
- a first seat (2), detachably mounted to the stroller frame (10); and
- a second seat (4),
**characterised in that** the second seat (4) has a pair of guiding bars (41), a seat back support bar (46) and a pair of support bars (48), wherein the pair of guiding bars (41) are secured to the pair of rear tubes (12), the seat back support bar (46) has two ends guided by the guiding bars (41), and the pair of support bars (48) are pivotably connected between the seat back support bar (46) and the pair of guiding bars (41), the support bars (48) are a pair of cushioning elements or pneumatic bars for cushioning the second seat (4).

2. A tandem stroller with an inclination adjustable second seat according to claim 1, wherein the stroller frame (10) is provided with a pair of connecting mounts (16) for mounting the first seat (2) thereon.

3. A tandem stroller with an inclination adjustable second seat according to claims 1 or 2, wherein the first seat (2) is detachably mounted to the stroller frame (10) for facing either forward or rearward.

4. A tandem stroller with an inclination adjustable second seat according to claims 1 or 2, wherein the first seat (2) is either a child safety seat or a baby carrier.

5. A tandem stroller with an inclination adjustable second seat according to claims 1 or 2, wherein the pair of guiding bars (41) are detachably secured to the pair of rear tubes (12) thereby to detachably connect the second seat (4) to the stroller frame (10).

6. A tandem stroller with an inclination adjustable second seat according to claim 1, wherein the pair of guiding bars (41) each has a guiding slot (44), the ends of the seat back support bar are guided by the guiding slots (44) for changing the inclination of the second seat (4).

7. A tandem stroller with an inclination adjustable second seat according to claim 6, wherein a manipulating mechanism (5) is associated with the seat back support bar (46) for controlling the positioning of the ends thereof thereby to adjust the inclination of the second seat (4).

8. A tandem stroller with an inclination adjustable second seat according to claim 6, wherein a plurality of positioning holes (45) are formed within the guiding slot (44) for positioning the ends of the seat back support bar (46).

9. A tandem stroller with an inclination adjustable second seat according to claim 7, wherein the manipulating mechanism (5) includes:
a pair of latching members (51) installed at the ends of the seat back support bar (46) for engaging with one of the positioning holes (45); and
a driving element (53) for disengaging the latching members (51) from one of the positioning holes (45).

10. A tandem stroller with an inclination adjustable second seat according to claim 7, wherein the manipulating mechanism (5) further includes a pair of associating member (54) connected between the pair of latching members (51) and the driving element (53) respectively, thereby to remotely control the pair of latching members (51) to engage and disengage with one of the positioning holes (45) thereby changing the inclination of the second seat (4).

11. A tandem stroller with an inclination adjustable second seat according to claims 1 to 2 and 6 to 10, wherein the guiding bars (41) further includes a limiting mechanism (6) with a stopper (61) for keeping the second seat (4) in an operation range in which the inclination of the second seat (4) can be adjusted by engaging the latching members (51) into different positioning holes (45), the limiting mechanism (6) can be released for allowing the second seat (4) to be folded into a folded position (50).

## Patentansprüche

1. Tandem-Kinderwagen mit einem neigungsverstellbaren zweiten Sitz, wobei der Tandem-Kinderwagen Folgendes umfasst:
- einen Kinderwagenrahmen (10), der ein Paar vorderer Rohre (11), ein Paar hinterer Rohre (12), das an dem Paar vorderer Rohre (11) angelenkt ist, und ein Paar Druckstreben (13), das mit dem Paar vorderer Rohre (11) durch ein Paar klappbarer Verbindungen (15) verbunden ist, aufweist;
- einen ersten Sitz (2), der an dem Kinderwagenrahmen (10) abnehmbar angebracht ist; und
- einen zweiten Sitz (4),
**dadurch gekennzeichnet, dass** der zweite Sitz (4) ein Paar Führungsstreben (41), eine Rückenlehnen-Haltestrebe (46) und ein Paar Haltestreben (48) aufweist, wobei das Paar Führungsstreben (41) an dem Paar hinterer Rohre (12) befestigt ist, wobei die Rückenlehnen-Haltestrebe (46) zwei Enden aufweist, die durch die Führungsstreben (41) geführt werden, und wobei das Paar Haltestreben (48) zwischen der Rückenlehnen-Haltestrebe (46) und dem Paar Führungsstreben (41) angelenkt ist, wobei die Haltestreben (48) ein Paar Federungselemente oder Druckluftstreben zum Federn des zweiten Sitzes (4) sind.

2. Tandem-Kinderwagen mit einem neigungsverstellbaren zweiten Sitz nach Anspruch 1, wobei der Kinderwagenrahmen (10) mit einem Paar Verbindungshalterungen (16) zum Anbringen des ersten Sitzes (2) versehen ist.

3. Tandem-Kinderwagen mit einem neigungsverstellbaren zweiten Sitz nach Anspruch 1 oder 2, wobei der erste Sitz (2) an dem Kinderwagenrahmen (10) abnehmbar so angebracht ist, dass er nach vom oder nach hinten gerichtet ist.

4. Tandem-Kinderwagen mit einem neigungsverstellbaren zweiten Sitz nach Anspruch 1 oder 2, wobei der erste Sitz (2) ein Kindersicherheitssitz oder eine Babytragetasche ist.

5. Tandem-Kinderwagen mit einem neigungsverstellbaren zweiten Sitz nach Anspruch 1 oder 2, wobei das Paar Führungsstreben (41) an dem Paar hinterer Rohre (12) abnehmbar so befestigt ist, dass dadurch der zweite Sitz (4) mit dem Kinderwagenrahmen (10) abnehmbar verbunden ist.

6. Tandem-Kinderwagen mit einem neigungsverstellbaren zweiten Sitz nach Anspruch 1, wobei das Paar Führungsstreben (41) jeweils einen Führungsschlitz (44) aufweist, wobei die Enden der Rückenlehnen-Haltestrebe durch die Führungsschlitze (44) geführt werden, um die Neigung des zweiten Sitzes (4) zu verändern.

7. Tandem-Kinderwagen mit einem neigungsverstellbaren zweiten Sitz nach Anspruch 6, wobei ein Betätigungsmechanismus (5) zu der Rückenlehnen-Haltestrebe (46) zum Steuern der Positionierung der Enden gehört, um dadurch die Neigung des zweiten Sitzes (4) einzustellen.

8. Tandem-Kinderwagen mit einem neigungsverstellbaren zweiten Sitz nach Anspruch 6, wobei mehrere Positionierungslöcher (45) in dem Führungsschlitz (44) zum Positionieren der Enden der Rückenlehne-Haltestrebe (46) ausgebildet sind.

9. Tandem-Kinderwagen mit einem neigungsverstellbaren zweiten Sitz nach Anspruch 7, wobei der Betätigungsmechanismus (5) Folgendes umfasst:
ein Paar Arretierungselemente (51), die an den Enden der Rückenlehne-Haltestrebe (46) eingebaut sind, um mit einem der Positionierungslöcher (45) in Eingriff zu gelangen; und
ein Antriebselement (53) zum Freigeben der Arretierungselemente (51) aus einem der Positionierungslöcher (45).

10. Tandem-Kinderwagen mit einem neigungsverstellbaren zweiten Sitz nach Anspruch 7, wobei der Betätigungsmechanismus (5) ferner ein Paar Verbindungselemente (54) umfasst, die jeweils zwischen dem Paar Arretierungselemente (51) und dem Antriebselement (53) eingebaut sind, um das Paar Arretierungselemente (51) fernzusteuern, so dass es mit einem der Positionierungslöcher (45) in Eingriff gelangt oder aus diesem freigegeben wird, um die Neigung des zweiten Sitzes (4) zu verändern.

11. Tandem-Kinderwagen mit einem neigungsverstellbaren zweiten Sitz nach Anspruch 1 oder 2 und 6 bis 10, wobei die Führungsstreben (41) ferner einen Begrenzungsmechanismus (6) mit einem Stopper (61) umfassen, um den zweiten Sitz (4) in einem Betriebsbereich zu halten, in dem die Neigung des zweiten Sitzes (4) eingestellt werden kann, indem die Arretierungselemente (51) mit verschiedenen Positionierungslöchern (45) in Eingriff gelangen, wobei der Begrenzungsmechanismus (6) gelöst werden kann, damit der zweite Sitz (4) in eine eingeklappte Position (50) geklappt werden kann.

## Revendications

1. Poussette à deux places comprenant un second siège ajustable en inclinaison, comprenant :
- un cadre de poussette (10) ayant une paire de tubes avant (11), une paire de tubes arrière (12) en pivotement avec la paire de tubes avant (11), et une paire de barres de poussée (13) connectées avec la paire de tubes avant (11) par une paire de joints pliables (15) ;
- un premier siège (2), monté de façon détachable sur le cadre de poussette (10) ; et
- un second siège (4),
**caractérisé en ce que** le second siège (4) possède une paire de barres de guidage (41), une barre de support de dossier de siège (46), et une paire de barres de support (48), dans laquelle la paire de barres de guidage (41) sont attachées sur la paire de tubes arrière (12), la barre de support de dossier de siège (46) a deux extrémités guidées par les barres de guidage (41), et la paire de barres de support (48) sont connectées en pivotement entre la barre de support de dossier de siège (46) et la paire de barres de guidage (41), les barres de support (48) étant une paire d'éléments d'amortissement ou de barres pneumatiques pour amortir le second siège (4).

2. Poussette à deux places comprenant un second siège ajustable en inclinaison selon la revendication 1, dans laquelle le cadre de poussette (10) est pourvu d'une paire de montures de connexion (16) pour monter le premier siège (2) sur celui-ci.

3. Poussette à deux places comprenant un second siège ajustable en inclinaison selon les revendications 1 ou 2, dans laquelle le premier siège (2) est monté de façon détachable sur le cadre de poussette (10) pour faire face soit vers l'avant soit vers l'arrière.

4. Poussette à deux places comprenant un second siège ajustable en inclinaison selon les revendications 1 ou 2, dans laquelle le premier siège (2) est soit un siège de sécurité pour enfant soit un porte-bébé.

5. Poussette à deux places comprenant un second siège ajustable en inclinaison selon les revendications 1 ou 2, dans laquelle la paire de barres de guidage (41) sont attachées de façon détachable sur la paire de tubes arrière (12) pour connecter ainsi le second siège (4) sur le cadre de poussette (10) de façon détachable.

6. Poussette à deux places comprenant un second siège ajustable en inclinaison selon la revendication 1, dans laquelle la paire de barres de guidage (41) ont chacune une fente de guidage (44), l'extrémité de la barre de support de dossier de siège étant guidée par les fentes de guidage (44) pour changer l'inclinaison du second siège (4).

7. Poussette à deux places comprenant un second siège ajustable en inclinaison selon la revendication 6, dans laquelle un mécanisme de manipulation (5) est associé avec la barre de support de dossier de siège (46) pour commander le positionnement des extrémités de celle-ci pour ajuster ainsi l'inclinaison du second siège (4).

8. Poussette à deux places comprenant un second siège ajustable en inclinaison selon la revendication 6, dans laquelle une pluralité de trous de positionnement (45) sont formés dans la fente de guidage (44) pour positionner l'extrémité de la barre de support de dossier de siège (46).

9. Poussette à deux places comprenant un second siège ajustable en inclinaison selon la revendication 7, dans laquelle le mécanisme de manipulation (5) inclut :
une paire d'éléments de verrouillage (51) installés aux extrémités de la barre de support de dossier de siège (46) pour s'engager dans l'un des trous de positionnement (45) ; et
un élément d'entraînement (53) pour dégager l'élément de verrouillage (51) hors de l'un des trous de positionnement (45).

10. Poussette à deux places comprenant un second siège ajustable en inclinaison selon la revendication 7, dans laquelle le mécanisme de manipulation (5) inclut en outre une paire d'éléments d'association (54) connectés entre la paire d'éléments de verrouillage (51) et l'élément d'entraînement (53) respectivement, pour commander ainsi à distance la paire d'éléments de verrouillage (51) pour engager l'un des trous de positionnement (45) et se dégager hors de celui-ci, en changeant ainsi l'inclinaison du second siège (4).

11. Poussette à deux places comprenant un second siège ajustable en inclinaison selon les revendications 1 à 2 et 6 à 10, dans laquelle les barres de guidage (41) incluent en outre un mécanisme de limitation (6) avec un arrêt (61) pour maintenir le second siège (4) dans une plage opérationnelle dans laquelle l'inclinaison du second siège (4) peut être ajustée en engageant l'élément de verrouillage (51) dans des trous de positionnement dififérents (45), le mécanisme de limitation (6) pouvant être relâché pour permettre au second siège (4) d'être replié jusque dans une position repliée (50).
